Europäisches Patentamt

**European Patent Office**

**Office européen des brevets**

(11) Publication number: **0 094 188**
A2

# (12) EUROPEAN PATENT APPLICATION

(21) Application number: 83302470.6

(51) Int. Cl.³: **G 01 B 5/12**

(22) Date of filing: **03.05.83**

(30) Priority: **08.05.82  GB 8213360**

(43) Date of publication of application: **16.11.83**
**Bulletin 83/46**

(84) Designated Contracting States: **DE FR GB IT**

(71) Applicant: **BOWERS INTERNAL GAUGE CO. LIMITED, Stanley Works Harris Street, Bradford West Yorkshire BD1 5JA (GB)**

(72) Inventor: **Singh, Mohan, 31 Brantwood Road, Bradford West Yorkshire BD6 (GB)**

(74) Representative: **Wharton, Peter Robert et al, URQUHART-DYKES & LORD Beckett's Bank Chambers 19 Cheapside, Bradford BD1 4HR (GB)**

(54) **Bore gauge.**

(57)     An internal bore gauge comprises a body portion 12 having radial slots 20 carrying a pair of diametrically opposed anvils 22 capable of controlled movement in the radial direction, the anvils 22 having rounded end faces 36 of radius of curvature close to the radius of the bore being measured. By having only two anvils, and give the bore contacting faces of the anvils a radius of curvature close to the radius of the bore being measured, range of movement of the anvils, and therefore the range of measurement of the device, can be increased since any tilting of the gauge in the bore is compensated for by the curved faces of the anvils.

EP 0 094 188 A2

- 1 -

## BORE GAUGE

This invention relates to an internal bore gauge.
Bore gauges, for measuring the internal
diameter of a bore, are commonly used in the engineering
industry and numbers of different models are available.
In essence most of them comprise a body having at one
end thereof three radially movable bore contacting
members or "anvils" which can be moved radially in
response to the turning of a screw thread similar to
a micrometer. These gauges provide high measurement
accuracy but only cover very small ranges, typically
0.005 inch to 0.010 inch. The gauges are set or zeroes
by means of a ring gauge which is a machined metal ring
having a bore of accurately known reference diameter
into which the bore gauge can be inserted for
calibration. Thus to cover a one inch range in steps
of 0.010 inch the number of gauges (or measuring heads
of gauges) required is 100 and the number of ring
gauges required is fifty. In practice few manufacturers
can afford to keep an entire range of bore gauges
and it is usual for a gauge to be ordered for a
specific application. When design changes take place
the gauge used for this application may well become

0094188

- 2 -

redundant.

The invention seeks to provide an internal bore gauge which has a very much greater range than existing types thereby allowing the user to keep very many fewer gauges or measuring heads to cover a specified range.

According to the present invention there is provided an internal bore gauge which comprises a body portion having raidal slots carrying a pair of diametrically opposed anvils capable of controlled movement in the radial direction, the anvils having rounded end faces of radius of curvature close to the radius of the bore being measured.

By having only two anvils, and giving the bore contacting faces of the anvils a radius of curvature close to the radius of the bore being measured, the range of movement of the anvils, and therefore the range of measurement of the device, can be increased since any tilting of the gauge in the bore is compensated for by the curved faces of the anvils. Thus, a gauge constructed in accordance with the invention may have a range of measurement considerably greater than prior art devices, typically in the order of 0.040 inches. This cuts down the number of gauges or measuring heads needed by a factor of 4 or 8, as well as cutting down the number of rings needed by a similar amount.

The gauge of the invention may employ a mechanism for urging the anvils in a radial direction similar to that used in conventional bore gauges, that is an actuating rod having a conical end portion which bears against the radially inner faces of the anvil and urges the anvils in a radial direction as the rod is moved in an axial direction. However, in a preferred construction of the invention the actuating rod has a plain end face contacting an accurately spherical ball which in turn contacts inclined radially inner end faces of the anvils. The anvils may be located within the slots in the body by means of leaf springs, and this arrangement enables the anvil/actuating ball to move transversely with respect to the axis of the operating rod so that the anvils will give an accurate reading even if the main body of the bore gauge is not exactly centrally of the bore.

The invention will be described further, by way of example, with reference to the accompanying drawings, in which:-

Figure 1 is a side elevational view, party in section, of a bore gauge constructed in accordance with the invention;

Figure 2 is an end elevational view of the gauge of Figure 1;

Figure 3 is a partial plan view of the operating head of the gauge of Figure 1; and

Figure 4 is a diagrammatic illustration of the measuring anvils in a bore.

Reffering to the drawings, an internal bore gauge generally designated 10 comprises a main body 12 to which is attached a sleeve 14 by means of screws 16. The sleeve 14 has an end plate 18 and the sleeve 14, body 12 and end plate 18 between them define a pair of opposed radial slots 20 within which are opposed radial anvils 22. The anvils 22 are held within the slots 20 and biased radially inwardly by means of leaf springs 24 held within axial slots in the main body 12 and operating rod 26 is carried axially within the main body 12 and bears against an accurately spherical ball 28 which in turn bears against the inclined radially inner surfaces 30 of the anvils 22. The rod 26 bears against the plunger 32 of a transducer.

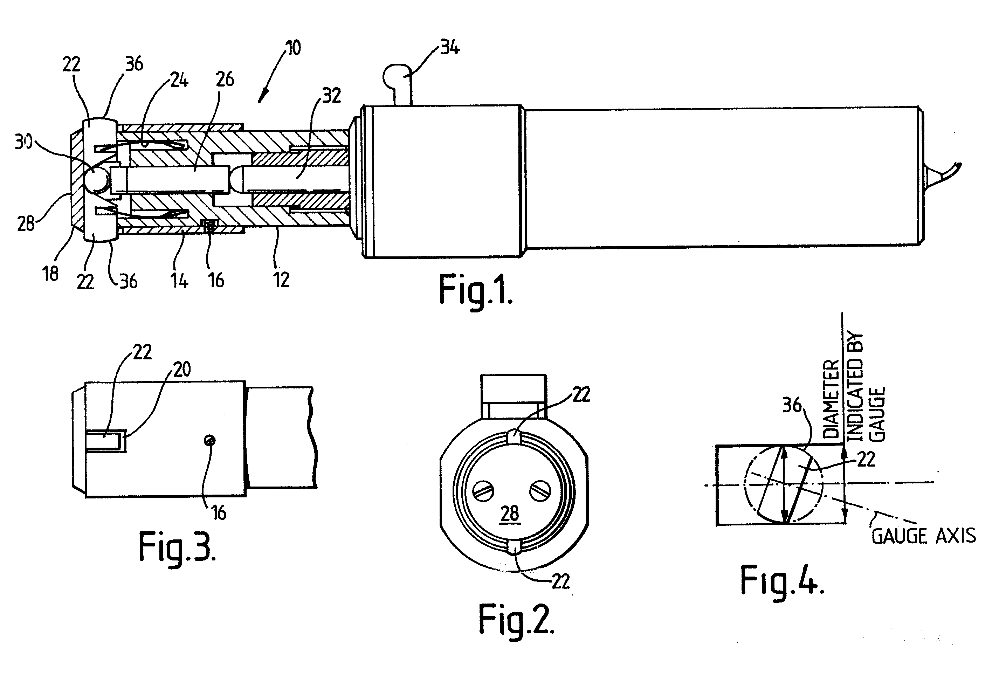

Alternatively the rod 26 may bear against a mechanical micrometer gauge arrangement. A retracting lever 34 is provided which withdraws the plunger 32 allowing the rod 26 to move to the right (as viewed in Figure 1) and the anvils to move to their radially innermost position at which their operating surfaces 36 are below the level of the sleeve 14. A number of sleeves 14 of different thicknesses, containing anvils 22 of different lengths, may be provided, to cover different ranges of values. The sleeve and anvil arrangement is referred to herein for convenience as "measuring head". The bore contacting surfaces 36 of the anvils 22 are curved and the radius of curvature is preferably chosen to coincide with the mid-point of the range to be measured by a given measuring head. Thus, if the range to be covered is 1.00 inch to 1.040 inch then the radius of curvature of the surface 36 would ideally be 1.020 inch.

In use, the lever 34 is operated to retract the anvils 36 and the measuring head of the device placed within a suitable ring gauge (not shown). This enables the device to be calibrated after which it may be placed in the bore to be measured when the spring biasing of the transducer plunger 32 will cause the anvils to move outwardly until they contact the internal bore surface. The transducer is connected to a suitable digital readout and the diameter of the bore can then be read off directly. Owing to the relatively large range, typically 0.040 inches, that can be covered by the device of the invention, inaccuracies would normally arise owing to the difficulty of maintaining the gauge accurately axial of the bore being measured. Owing to the use of rounded anvil surfaces 36 in the device of the invention it is not necessary to maintain the gauge accurately axial as is illustrated in Figure 4. In the latter Figure the gauge axis is shown displaced quite considerably from the axial position but it can be seen that the diameter measured is nevertheless the true diameter of the bore owing to the radiused surfaces 36. However, the use of the spherical ball 28 enables the anvils and ball system to move somewhat transversely of the axis of the device without effecting the accuracy of the reading.

As mentioned before the seleve 14 which together with the anvils 22 and end plate 28 form the measuring head are simply removed by undoign the grub screw 16 and replaced by another sleeve covering a different range. One sleeve is required at every step of 0.040 inches and the diameter of the sleeve is preferably selected to be 0.002 inches less than the smallest diameter of the range being used. That is, if a 1 inch to 1.040 inch range is required, then the sleeve diameter would be 0.998 inch.

Thus the device of the invention enables a larger range to be measured accurately than hithertofor possible and thereby enables the user to maintain fewer bore gauges or measuring heads, together with the corresponding ring gauges than hitherto in order to cover a specified range of bore sizes.

When the ball 28 contacts the end plate 18, the anvils 22 move about by an amount which is accurately reproduceable. This can be used to provide a fixed datum point, since it can be measured for example by zeroing with a known size ring gauge, and thereafter no ring gauge is needed in the use of the device, although occasional checks can optionally be carried out to ensure that the reading is within ± one micrometer of the datum point. This makes the use of the device of the

- 6 -

of the invention quicker and easier since fewer operations have to be performed when making a measurement with it. The sleeve 14 can be changed, but, provided the same anvils and bore are used, the datum point will remain the same and therefore there would be no need to recalibrate in these circumstances. The ball 28 is preferably of an extremely hard material such as tungsten carbide, and similarly the ball contacting portion of the end plate 18 can have an inset portion of tungsten carbide as can the ball contacting end of the operating rod 26.

- 1 -

CLAIMS

1.    An internal bore gauge which comprises a body portion having radial slots carrying a pair of diametrically opposed anvils capable of controlled movement in the radial direction, the anvils having rounded end faces of radius of curvature close to the radius of the bore being measured.

2.    A gauge as claimed in claim 1 in which the anvils have inclined radially inner end faces which contact an accurately spherical ball which in turn contacts an actuating rod.

3.    A gauge as claimed in claim 2 in which the anvils are located in slots by means of leaf springs giving the anvil/actuating ball assembly some transverse freedom of movement with respect to the axis of the operating rod.

4.    A gauge as claimed in any one of claims 2 or 3 in which the actuating rod bears against a transducer which is electrically connected to a digital read out.

5.    A gauge as claimed in any one of claims 1 to 4 in which the radius of curvature of the anvils is chosen to be approximately the same as the mid point of the range of bore sizes covered by the gauge.

6.    A gauge as claimed in any one of claims 1 to 5 in which the radially outermost position of the anvils is reproduceable and is accurately determined to act as a datum point.

7.     An internal bore gauge substantially  as hereinbefore described with reference to and as illustrated in the accompanying drawings.

Fig.1.

Fig.3.

Fig.2.

Fig.4.

DIAMETER INDICATED BY GAUGE

GAUGE AXIS

1/1

0094188